# EUROPEAN PATENT SPECIFICATION

(11) **EP 2 360 408 B1**
(45) Date of publication and mention of the grant of the patent: **05.03.2014**
(21) Application number: 10380126.2
(22) Date of filing: 08.10.2010
(51) Int. Cl.: F16L 23/024, F16L 25/12, F16L 47/14

(54) **Security splicing system of aligned pipes, against the expansion and/or contraction thereof**
Am Gegenstand des Patents mit Erfindungsnummer P200800702 (2) »Sicherheitsspleißsystem für ausgerichtete Rohre gegen Ausdehnung bzw. Zusammenziehung vorgenommene Verbesserungen
Amélioration concernant l'objet du brevet d'invention numéro P200800702 (2) Système sécurisé de jointage de tuyaux alignés protégés contre l'expansion et/ou la contraction

(30) Priority: 12.02.2010 ES 201030197
(43) Date of publication of application: 24.08.2011
(73) Proprietor: Pires Cabado, Elisabet Patricia, 08328 Alella Barcelona (ES); Pires Cabado, Bárbara Inés, 08328 Alella Barcelona (ES)
(72) Inventor: Pires Cabado, Elisabet Patricia, 08328 Alella Barcelona (ES); Pires Cabado, Bárbara Inés, 08328 Alella Barcelona (ES)
(74) Representative: Espiell Volart, Eduardo Maria

(56) References cited:
- EP-A1- 2 101 099
- US-A- 4 679 830
- US-A- 5 100 183
- US-A- 5 779 285
- US-A- 5 842 726

## Description

The present patent makes reference to security splicing system of aligned pipes, against the expansion and/or contraction thereof, the essential characteristic of which is the fact that the possible aggressive action of the components of the splicing system on the aligned pipes to be spliced, and specifically in the case of pipes are composed of polyethylene, is compensated without affecting the assembly due to the addition of a protection element, the components, structure and function of which are described below.

### PRIOR ART

The basic characteristics of the splicing system that is the object of the patent ESP 200800702 (Pires) are based on the incorporation of a double flange, consisting of two anchoring elements solidly joined by means of rods and a watertight flange centrally disposed at the ends of the pipes to be joined.

These anchoring elements are firmly fastened to the outer surface of the pipes to be spliced, thanks to an anchoring profile disposed in its interior, having a series of projections with a truncated cone-shaped profile fastened to the outer face of the pipes, in such a manner that, on tightening the pressure screws of the exterior clasp, said projections are practically driven into said outer face of the pipe, guaranteeing sufficient anchoring to avoid any displacement.

### OBJECT OF INVENTION

The physical characteristics of pipes composed of polyethylene cause these to be affected in their dimensional stability, and specifically in their diametrical profile, if a certain tightening action is exerted externally.

In the case of the use of the security splicing system that is the object of the patent ESP 200800702 (PIRES), although the use of the elements having the aforementioned projections is essential to guarantee any linear displacement caused by the expansions or contractions due to changes in temperature, the action of said projections, on being driven into the outer surface of the pipes composed of polyethylene may cause deformations in the structure thereof. Said deformations may cause the loss of watertightness in the spliced area of the aligned pipes.

This is sufficiently resolved through the application of an internal lock ring, the basic element of the system which is the object of this invention, the ring of which is disposed inside the ends of each of the pipes to be spliced and becoming, once positioned and conveniently adjusted by means of the expansion device with which it is equipped, the compensating element of the external pressure suffered by the pipes, avoiding their deformation and maintaining the dimensional stability of their diameters, both external and internal, thereby fully guaranteeing the watertightness and stability of the splice.

### GRAPHIC INFORMATION

In order to better describe the application of the previously described improvements, drawings are attached wherein, by way of practical example of embodiment, the internal lock rings that are the object of the improvements of the invention, mentioned earlier, have been represented.

In said drawings,

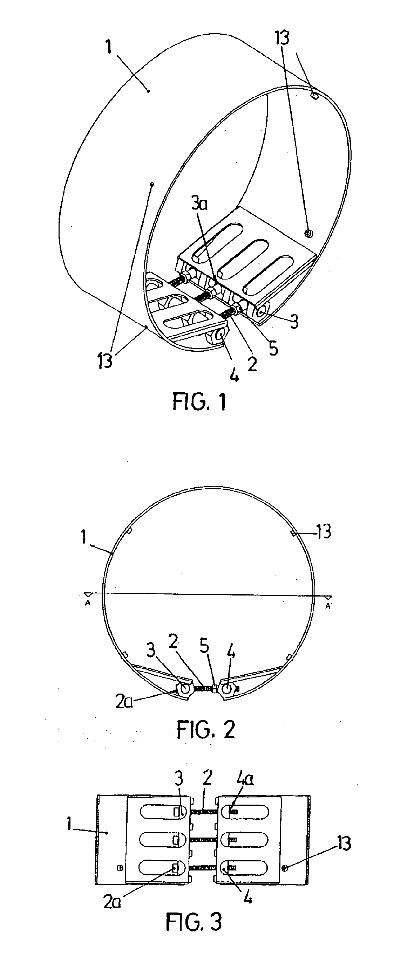

- Fig. 1: shows a perspective view of an internal lock ring, according to the addition of the invention, equipped with a single expansion device;
- Fig. 2 and 3: show, respectively, elevational and plan views of the same lock ring;
- Fig. 4: shows a perspective view of a similar internal lock ring, equipped with two expansion devices; and finally,
- Fig. 5: shows a schematic view of a splicing system, according to patent, ESP 200800702 disposed at the ends of two spliced pipes, the assembly being equipped with internal lock rings inherent to the system according to the invention.

In accordance with the drawings, the improvements introduced in the security splicing system of aligned pipes consist of applying a ring in the interior of the end of each polyethylene pipe to be spliced. This ring consists of a rectangular stainless steel sheet -1-, being incomplete in the area where an expansion device with which it is equipped is disposed in such a manner that, on acting thereupon, it causes the aperture of the rectangular sheet -1-, expanding its diameter until becoming strongly pressed against the inner face of the end of each of the pipes -6- and -7- being spliced.

The expansion ring -1- is equipped with a set of several identical screws -2-, disposed in parallel through the pass-through orifices -3a- of a spindle -3- which is transversely disposed at one of the open ends of the rectangular sheet -1-, the screws of which are retained by their respective heads -2a-.

These screws -2- are threaded onto the corresponding orifices -4a- of the spindle -4- which is disposed transversely and parallel to the spindle -3-, at the opposite end of the rectangular sheet -1-. These orifices -4a- of the spindle -4- are threaded with identical thread pitch as the screws -2-, in such a manner that they are fastened by threading to the aforementioned spindle -4-.

By adequately acting upon respective expansion nuts -5- disposed on each of the screws -2-, the necessary pressure is exerted upon the longitudinal spindle -3- of pass-through orifices -3a-, causing the expansion of the ring -1- until becoming strongly pressed against the inner face of the end of each of the pipes -6- and -7-, wherein said rings -1- have been disposed, at the moment of splicing thereof by means of the device that is the object of the security splicing system, according to patent ESP 200800702.

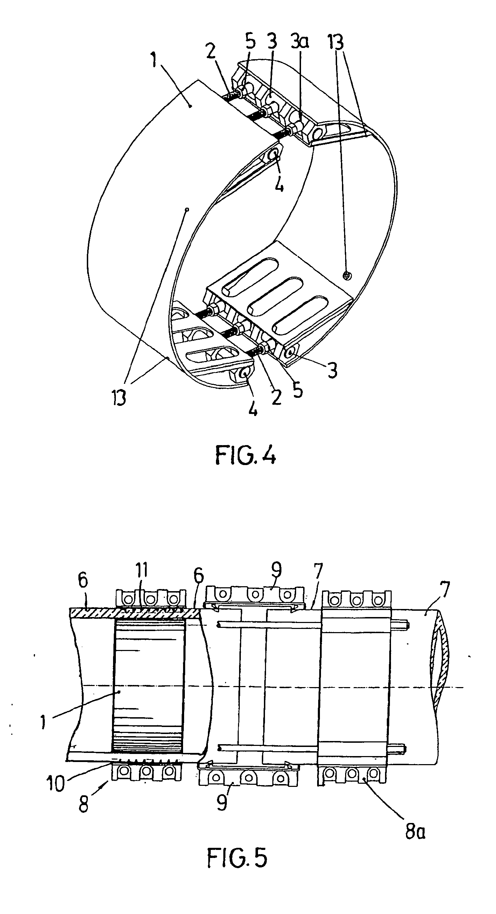

In accordance with this security splicing system, according to patent ESP 200800702, and as schematically represented in figure 5, these two pipes -6- and -7- are fastened by the anchoring elements or flanges -8- and -8a-, together with the watertight joining flange -9-, disposed at the centre of the assembly. Each of these anchoring flanges -8-and -8a- have, on their inner face, a clasp -10- having a series of projections with a truncated cone-shaped structure -11- which, on acting upon its own pressure screws of the anchoring flanges -8- and -8a-, are practically driven into the outer face of the pipes, thereby avoiding the possibility of displacement.

It is precisely the force exerted upon each of the pipes -6- and -7- at the moment the projections -11- are driven into its outer face, which is compensated and offset by the stabilising action of the rectangular metal sheet -1- of the inner ring, in accordance with the improvements that are the object of this addition, avoiding any deformation in the diametrical profile of each of the spliced polyethylene pipes.

The description of the inner ring is completed by indicating that several projecting fixing screws -13- are disposed on the rectangular stainless steel sheet -1-for the purpose of preventing the accidental displacement of the ring along the interior of the pipe, once positioned against the inner face of the pipe itself.

Likewise, as a variant the rectangular steel sheet -1- may have two expansion devices, identical and symmetrical, disposed in diametrical opposition to each other, as can be clearly observed in figure 4.

Having sufficiently described of said splicing system that is the object of the invention, we must point out that any variation in dimensions, shapes and types of materials used in the practical embodiment of these additions, will not alter the essentiality thereof and are summarised in the following claims.

## Claims

1. (2) Security splicing system of aligned pipes, against the expansion and/or contraction thereof, comprises inner claps (10), internal lock rings (1), a double flange constituted by two anchoring elements (8) and (8a) and a watertight joining flange (9), which are anchored to the outer surface of the ends of the polyethylene pipes to be spliced (6) and (7), thank to the action of projections with a truncated cone-shaped profile (11) disposed on the inner clasp (10), which on being pressed are driven into the outer face of the ends of both pipes, **characterised in that** a respective internal lock ring, consisting of a rectangular stainless steel sheet (1), being incomplete in the area where an expansion device is disposed, the ring of which is disposed in the interior of the ends of each of the pipes (6) and (7) to be spliced and disposed underneath the anchoring elements (8) and (8a) and conveniently adjusted against the inner surface of the corresponding pipe, eliminating the possibility of deformation thereof on being the compensating element of the pressure exerted externally by the projections (11) that are driven into the exterior of each pipe.
wherein
the rectangular steel sheets (1) which constitute the inner lock rings have projecting fixing screws (13) which are positioned against the inner face of the pipe, preventing displacement of the aforementioned rectangular sheet (1) which may, likewise and in some applications, have two expansion devices, identical and symmetrical, disposed in diametrical opposition to each other.

2. Security splicing system of aligned pipes, against the expansion and/or contraction thereof, according to the preceding claim 1, **characterised in that** expansion device of the rectangular steel sheet (1) comprises a series of identical and parallel screws (2) disposed in the pass-through orifices (3a) of a spindle (3), disposed transversely on one of the ends of the rectangular sheet (1) and retained by their respective heads (2a) and threaded into the corresponding orifices, also threaded, (4a) of the spindle (4), which is disposed transversely at the opposite end of the rectangular sheet (1) and parallel to the spindle (3), in such a manner that, by acting upon the nuts (5) of each screw (2), the adequate pressure is exerted on the spindle (3), causing the expansion of the rectangular sheet (1) of the ring until becoming strongly pressed against the inner face of the ends of each of the pipes (6) and (7).

## Patentansprüche

1. Sicherheitsspleißsystem ausgerichteter Rohre gegen die Ausweitung und/oder Kontraktion derselben, das innere Klemmen (10), innere Verschlussringe (1), einen aus zwei Verankerungselementen (8) und (8a) gebildeten doppelten Flansch und einen wasserdichten Verbindungsflansch (9) umfasst, die an der äußeren Oberfläche der Enden der zu spleißenden Polyethylenrohre (6) und (7) verankert sind, dank der Wirkung von Vorsprüngen mit einem abgestumpften kegelförmigen Profil (11), die auf der inneren Klemme (10) angeordnet sind und die bei Ausübung von Druck in die Außenseite der Enden beider Rohre getrieben werden, **dadurch gekennzeichnet, dass** bei diesem ein entsprechender innerer Verschlussring, der aus einem rechteckigen Edelstahlblech (1) besteht, in dem Bereich unvollständig ist, in dem eine Ausweitungsvorrichtung angeordnet ist, dessen Ring im Inneren der Enden jedes zu spleißenden Rohrs (6) und (7) angeordnet ist und unter den Verankerungselementen (8) und (8a) angeordnet ist und passend gegen die innere Oberfläche des entsprechenden Rohrs angepasst ist, wobei die Möglichkeit einer Deformation desselben eliminiert wird, da dieser das ausgleichende Element des von den Vorsprüngen (11) extern aufgebrachten Drucks darstellt, die in die Außenseite jedes Rohrs getrieben werden, wobei die rechteckigen Stahlbleche (1), welche die inneren Verschlussringe bilden, hervorstehende Befestigungsschrauben (13) besitzen, die gegen die Innenseite des Rohrs positioniert sind und eine Verschiebung des vorstehend erwähnten rechteckigen Blechs (1) verhindern, das ebenfalls und in einigen Anwendungen zwei Ausweitungsvorrichtungen besitzen kann, die identisch und symmetrisch einander diametral entgegengesetzt angeordnet sind.

2. Sicherheitsspleißsystem ausgerichteter Rohre gegen die Ausweitung und/oder Kontraktion derselben nach dem vorstehenden Anspruch 1, **dadurch gekennzeichnet, dass** die Ausweitungsvorrichtung des rechteckigen Stahlblechs (1) eine Reihe von identischen und parallelen Schrauben (2) umfasst, die in den Durchgangsöffnungen (3a) einer Spindel (3) angeordnet sind, die transversal auf einem der Enden des rechteckigen Blechs (1) angeordnet und von deren entsprechenden Köpfen (2a) zurückgehalten
werden und in die entsprechenden, ebenfalls mit einem Gewinde (4a) versehenen Öffnungen der Spindel (4) geschraubt sind, die transversal an den gegenüberliegenden Ende des rechteckigen Blechs (1) und parallel zur Spindel (3) auf solche Weise angeordnet ist, dass bei Einwirken auf die Muttern (5) jeder Schraube (2) der geeignete Druck auf die Spindel (3) ausgeübt wird, sodass die Ausweitung des rechteckigen Blechs (1) des Rings erzeugt wird, bis dieses kräftig gegen die Innenseite der Enden jedes Rohrs (6) und (7) gepresst wird.

## Revendications

1. (2) Système de sécurité pour la jonction de tuyaux alignés, contre leur expansion et/ou contraction, il comprend : des fermoirs internes (10), des bagues de verrouillage internes (1), un double bord constitué de deux éléments d'ancrage (8) et (8a) et un bord de jonction étanche (9), qui sont ancrés à la surface externe des extrémités des tuyaux en polyéthylène devant être joints (6) et (7), grâce à l'action de projections au profil en forme de cône tronqué (11) disposées sur le fermoir interne (10), qui, lorsqu'elles sont comprimées, sont amenées à l'intérieur de la face externe des extrémités des deux tuyaux, **caractérisé en ce qu'**une bague de verrouillage interne respective, constituée d'une plaque en acier inoxydable rectangulaire (1), étant incomplète dans la zone où un dispositif d'expansion est disposé, dont la bague est disposée à l'intérieur des extrémités de chacun des tuyaux (6) et (7) devant être joints et disposé sous les éléments d'ancrage (8) et (8a) et correctement ajusté contre la surface interne du tuyau correspondant, éliminant la possibilité de déformation de ce dernier en étant l'élément de compensation de la pression exercée extérieurement par les projections (11) qui sont amenées dans l'extérieur de chaque tuyau, dans lequel les plaques d'acier rectangulaires (1) qui constituent les bagues de verrouillage internes possèdent des vis de fixation en projection (13) qui sont positionnées contre la face interne du tuyau, empêchant le déplacement de la plaque rectangulaire mentionnée ci-dessus (1) qui peuvent, également et dans certaines applications, posséder deux dispositifs d'expansion, identiques et symétriques, disposés dans une position diamétralement opposée l'un par rapport à l'autre.

2. Système de sécurité pour la jonction de tuyaux alignés, contre leur expansion et/ou contraction, selon la revendication 1 précédente, **caractérisé en ce que** le dispositif d'expansion de la plaque d'acier rectangulaire (1) comprend une série de vis identiques et parallèles (2) disposées dans les orifices traversants (3a) d'un axe (3), disposées transversalement sur l'une des extrémités de la plaque rectangulaire (1) et retenues par leurs têtes respectives (2a) et filetées dans les orifices correspondants, également filetés, (4a) de l'axe (4), qui est disposé transversalement à l'extrémité opposée de la plaque rectangulaire (1) et parallèle à l'axe (3), de telle façon qu'en agissant sur les écrous (5) de chaque vis (2), la pression adéquate est exercée sur l'axe (3), provoquant l'expansion de la plaque rectangulaire (1) de la bague jusqu'à ce qu'elle soit fortement comprimée contre la face interne des extrémités de chacun des tuyaux (6) et (7).
